# Europäisches Patentamt

# European Patent Office

# Office européen des brevets

(19)

(11) Numéro de publication: **0 147 280**
**B1**

(12)

# FASCICULE DE BREVET EUROPÉEN

(45) Date de publication du fascicule du brevet:
25.01.89

(51) Int. Cl.⁴: **B 60 L 9/30**

(21) Numéro de dépôt: **84402521.3**

(22) Date de dépôt: **06.12.84**

(54) **Procédé et dispositif d'alimentation d'une charge notamment un moteur à courant continu pour locomotives ferroviaires du type bi-courant.**

(30) Priorité: **13.12.83 FR 8319899**

(43) Date de publication de la demande:
**03.07.85 Bulletin 85/27**

(45) Mention de la délivrance du brevet:
**25.01.89 Bulletin 89/4**

(84) Etats contractants désignés:
**AT BE CH DE FR GB IT LI LU NL SE**

(56) Documents cité:
**DE-B-1 264 595**
**FR-A-2 256 577**
**FR-A-2 322 476**

(73) Titulaire: **JEUMONT- SCHNEIDER Société anonyme dite:, 31- 32, Quai de Dion Bouton, F-92811 Puteaux Cedex (FR)**

(72) Inventeur: **Bonal, Jean, 54, Boulevard Aristide Briand, F-77000 Melun (FR)**

(74) Mandataire: **Weinmiller, Jürgen, Lennéstrasse 9 Postfach 24, D-8133 Feldafing (DE)**

LIBER, STOCKHOLM 1989

## Description

La présente invention concerne un dispositif d'alimentation d'une charge telle qu'un moteur à courant continu, moteur synchrone autopiloté, moteur asynchrone associé à un onduleur de courant à commutation forcée, notamment un moteur de traction pour locomotives ferroviaires du type bi-courant à réglage de vitesse par équipement à semi-conducteurs. On connaît des dispositifs d'alimentation à partir d'une source à courant continu 1 500 Volts, 3 000 Volts ou une source à courant alternatif monophasé notamment 25 ou 50 Kilovolts, 50 Hz ou 60 Hz pour locomotives modernes. Les équipements à semi-conducteurs de tels dispositifs, du type statique, comprennent les ponts redresseurs en traction "monophasé" se répartissant en deux catégories fondamentales les ponts totalement commandés ou ponts tout thyristor et les ponts semi-commandés ou encore ponts mixtes et les hacheurs de traction en "continu".

On connaît également un dispositif pour l'alimentation en courant continu et en courant alternatif d'au moins un moteur de traction et dont le circuit électrique permet la réutilisation, en monophasé, des éléments semi-conducteurs principaux, tels que thyristors, du hacheur pour constituer un pont mixte.

Cependant, le circuit électrique d'un tel dispositif a pour inconvénient d'utiliser un nombre important d'éléments contacteurs pour modifier la configuration du dispositif du mode hacheur en mode redresseur ou vice-versa. De plus, ce dispositif connu ne permet pas le freinage par récupération aussi bien en continu qu'en alternatif et présente également un mauvais facteur de puissance.

Le brevet DE-B-1 264 595 est relatif à un dispositif pour l'alimentation d'un moteur à courant continu à partir soit d'une source de courant continu soit d'une source de courant alternatif. Lors de l'alimentation par une source de courant alternatif, le convertisseur de courant alternatif en courant continu est du type pont mixte.

Ce dispositif a pour inconvénient de nécessiter des dispositifs de commutations des thyristors. D'autre part, il ne permet pas d'assurer la récupération d'énergie lorsque la charge fonctionne en générateur.

Enfin, le fonctionnement du pont provoque un décalage de l'onde de courant par rapport à l'onde de tension et le dispositif présente un mauvais facteur de puissance.

La présente invention a pour but d'éliminer les inconvénients ci-dessus en proposant un dispositif d'alimentation d'une charge telle qu'un moteur à courant continu, moteur synchrone auto-piloté, moteur asynchrone soit à partir d'une source à courant continu, soit à partir d'une source à courant alternatif. Le dispositif selon l'invention est caractérisé en ce qu'il comprend un seul dispositif de conversion comprenant quatre éléments semi-conducteurs unidirectionnels $I_1$ - $I_4$ montés en pont dont au moins trois sont constitués par des éléments dont tout changement d'état peut être commandé directement par une logique de commande permettant le fonctionnement du dispositif de conversion en mode hacheur lorsque le dispositif est alimenté en courant continu et que la charge fonctionne en moteur ou en générateur, et lorsqu'il est alimenté en courant alternatif soit en mode redresseur lorsque la charge fonctionne en récepteur, soit en onduleur pour assurer la récupération d'énergie lorsque la charge fonctionne en générateur, en ce que la tension de la charge est inversée lorsque la charge passe du fonctionnement en moteur au fonctionnement en générateur, de manière que le courant ne soit pas inversé dans le dispositif de conversion, en ce que dans le mode de fonctionnement hacheur du dispositif de conversion précité, quand le dispositif est alimenté en courant continu:

- lorsque la charge fonctionne en moteur l'élément semi-conducteur $I_1$ de l'une des branches du pont, formant l'interrupteur du hacheur, est un élément dont tout changement d'état peut être commandé directement par la logique de commande tandis que les deux éléments semi-conducteurs $I_3$, $I_4$ du pont montés en parallèle à la charge précitée, font office de diode en permanence, le dernier élément semi-conducteur $I_2$ étant en permanence bloqué,

- lorsque la charge fonctionne en mode générateur les éléments semiconducteurs $I_2$, $I_3$ du pont précité sont passant en permanence, l'élément semiconducteur $I_1$ du pont étant bloqué en permanence tandis que le dernier élément semi-conducteur $I_4$ est un élément dont tout changement d'état peut être commandé directement par la logique de commande,

en ce qu'en mode de fonctionnement redresseur ou onduleur du dispositif de conversion précité lorsque le dispositif est alimenté en courant alternatif, les deux éléments semi-conducteurs $I_1$, $I_2$ du pont précité changent d'état alternativement et successivement et sont des éléments dont tout changement d'état peut être commandé directement par la logique de commande tandis que les deux autres éléments semi-conducteurs $I_3$, $I_4$ sont passant en permanence, le dispositif de conversion délivrant en mode de fonctionnement onduleur un courant alternatif dont la composante fondamentale est en phase avec la composante fondamentale de la tension alternative d'alimentation.

On peut noter qu'en montage monocourant, il suffit qu'au moins deux de ces éléments semi-conducteurs soient constitués par des éléments dont tout changement d'état peut être commandé directement, les deux autres éléments fonctionnant en diode, tandis que dans un montage bi-courant, il faut nécessairement que trois des quatre éléments au moins soient constitués par des éléments dont tout changement d'état peut être commandé directement.

Ces éléments semi-conducteurs dont tout changement d'état peut être commandé directement sont par exemple des thyristors à désamorçage commandé par gâchette dits "GTO" ou bien des transistors à porte isolée dits "IGT". L'invention n'est pas limitée à ces types de semiconducteurs mais au contraire s'étend à tout type de semi-conducteur unidirectionnel formant interrupteur de puissance dont le passage de l'état saturé à l'état bloqué, c'est-à-dire le désamorçage pour un thyristor, est commandé directement en appliquant un signal sur une porte sans nécessiter un circuit complexe annexe permettant par exemple d'annuler le courant circulant dans cet élément pour en modifier l'état.

Ainsi, la configuration du dispositif de conversion selon la présente invention reste inchangée qu'il soit alimenté en courant continu ou en courant monophasé.

Plus précisément, selon l'invention, le dispositif d'alimentation d'un moteur électrique de traction pour locomotive ferroviaire du type bi-courant, à partir d'une source soit à courant continu soit à courant alternatif comprend en combinaison:

- un transformateur dont le primaire est relié à la source lorsque celle-ci est du type à courant alternatif, une inductance et un condensateur étant disposés en série entre les bornes du secondaire de ce transformateur par l'intermédiaire d'un inverseur connecté de manière à relier l'inductance et le condensateur, soit au secondaire du transformateur lorsque la source est du type à courant alternatif, soit directement à la source lorsque celle-ci est du type à courant continu tout en déconnectant le secondaire du circuit dans ce dernier cas, et

- entre les bornes du condensateur un pont constitué de quatre éléments semi-conducteurs unidirectionnels formant interrupteurs, trois d'entre eux au moins étant constitués par des éléments dont tout changement d'état peut être commandé directement tandis que le quatrième peut être a amorçage commandé et désamorçage naturel, le moteur (M) étant connecté à la sortie de ce pont éventuellement en série avec une inductance de lissage.

L'invention sera mieux comprise et d'autres buts, caractéristiques, détails et avantages de celle-ci apparaîtront plus clairement au cours de la description explicative qui va suivre, faite en référence aux dessins schématiques annexés donnés uniquement à titre d'exemple illustrant un mode de réalisation de l'invention et dans lesquels:

- la Figure 1 représente le schéma électrique général du dispositif selon l'invention;
- la Figure 2 illustre le fonctionnement du dispositif selon l'invention lorsqu'il est alimenté à partir d'une source de courant continu; et
- la Figure 3 illustre le fonctionnement du dispositif selon l'invention lorsqu'il est alimenté à partir d'une source de courant alternatif.

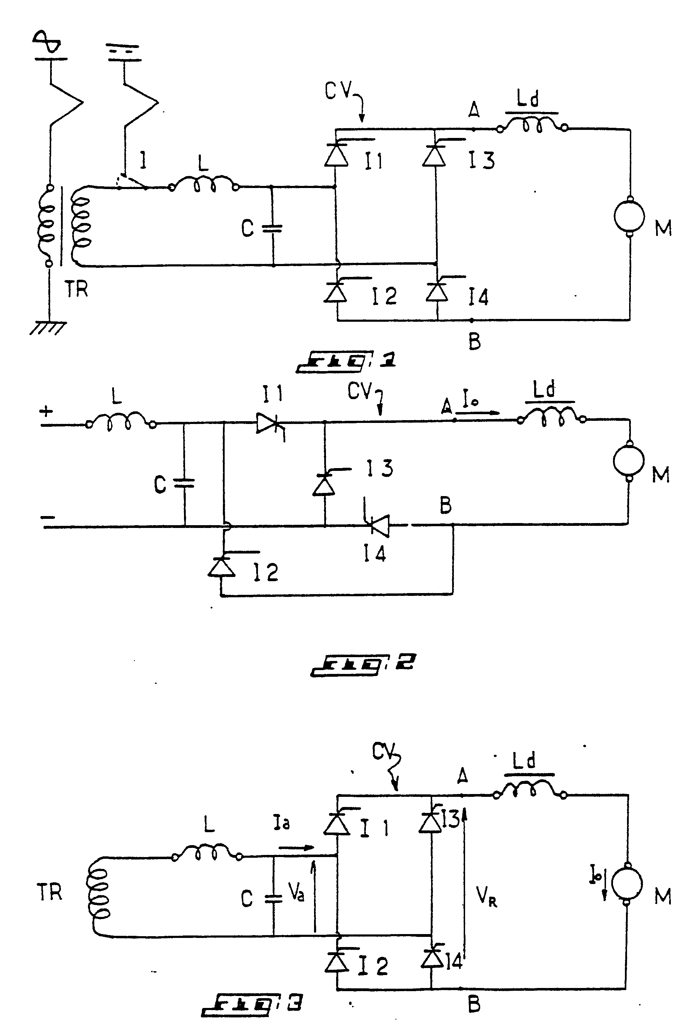

La Figure 1 montre le schéma du dispositif pour l'alimentation par caténaire soit en courant continu, soit en courant monophasé, d'un moteur de traction M à courant continu monté en série avec son inductance de lissage Ld, le moteur M pouvant être du type à excitation série ou à excitation parallèle. Le dispositif comporte un transformateur de puissance TR alimenté en courant monophasé, par exemple 25 kV ou 50 kV, 50 Hz ou 60 Hz, et dont le secondaire est relié par l'intermédiaire de l'inverseur commande 1 au filtre de tête LC, la position en pointillés de l'interrupteur 1 représentant l'alimentation du moteur M en courant continu par exemple 1 500 ou 3 000 Volts (le transformateur de puissance TR est alors isolé du filtre de tête LC).

Un dispositif de conversion CV à éléments semi-conducteurs unidirectionnels de puissance formant interrupteur 11, 12, 13, 14 est connecté entre le filtre LC et les bornes de sortie A et B auxquelles est reliée la charge formée par l'inductance Ld et le moteur M.

On reconnaîtra facilement que la configuration générale du dispositif de conversion CV est celle d'un pont redresseur à quatre branches dont chacune comporte au moins un élément semi-conducteur. Ainsi, dans le cas où tous les éléments semi-conducteurs 11 à 14 sont des thyristors de puissance, les éléments semi-conducteurs 11 et 12 forment les deux branches supérieures du pont avec l'anode de 11 et la cathode de 12 reliées à la jonction commune de L et C du filtre et leur cathode et anode respectivement reliées aux bornes A et B, tandis que les éléments semi-conducteurs 13 et 14 constituent les branches inférieures du pont avec la cathode de 13 et l'anode de 14 reliées respectivement aux bornes A et B et l'anode de 13 et la cathode de 14 reliées à la jonction commune du condensateur 6 et de la borne du secondaire du transformateur TR.

La Figure 2 illustre le fonctionnement du dispositif lorsqu'il est alimenté en courant continu.

Lorsque le moteur M fonctionne en traction, le dispositif de conversion CV est équivalent à un hacheur dont l'interrupteur 11 constitue le semi-conducteur principal permettant de moduler la puissance débitée par la source. Ainsi, l'état passant ou bloqué de l'élément semi-conducteur 11 est commandé de façon appropriée par une logique de commande (non représentée), les éléments semi-conducteur 13 et 14 étant toujours en étant passant tandis que l'élément semi-conducteur 12 est bloqué en permanence. Les éléments semi-conducteurs 13 et 14 se comportent donc comme des diodes de roue libre ou de déversement.

Ainsi, lorsque l'élément semi-conducteur 11 est conducteur, le courant 10 du moteur est fourni par la source à travers l'élément semi-conducteur 11 et lorsque celui-ci est bloqué, le courant du moteur se referme à travers les éléments semi-conducteurs 13 et 14 formant diodes de roue libre jusqu'au reamorçage de 11. Il est à noter que le changement d'état de l'élément semi-conducteur 11 comme il ressort du fonctionnement ci-dessus, doit être commandé. Selon l'invention, cet élément 11 est un thyristor à désamorçage commandé par gachette.

La charge M fonctionne en générateur, il est possible de récupérer l'énergie en commandant les éléments semi-conducteurs de telle façon que l'élément semi-conducteur 11 soit bloqué en permanence, les éléments semi-conducteurs 12 et 13 soient en état passant en permanence et l'élément semi-conducteur 14 alternativement passant ou bloqué (14 doit alors être un thyristor à désamorçage commandé par gâchette). Par une telle commande, on a donc inversé les polarités aux bornes A et B lorsque le moteur est devenu générateur. La Figure 3 illustre le fonctionnement du dispositif lorsqu'il est alimenté à partir d'une source de courant alternatif à partir du secondaire du tranformateur de puissance FR, les éléments 13 et 14 étant alors équivalents à des diodes.

La source alternative fournit un courant 10 à la charge lorsque les thyristors formant interrupteurs 11 ou 12 du circuit de la Figure 3 conduisent en dehors de ces instants les éléments 13 et 14 assurent le passage du courant. Lorsque la charge fonctionne en générateur, c'est-à- dire lorsque l'on récupère l'énergie, le courant s'écoule dans le dispositif de conversion dans le même sens que lorsque la charge fonctionne en moteur, mais par contre, la tension aux bornes du moteur est inversée. Le dispositif de conversion fonctionne alors en onduleur de façon classique.

Il est préférable, bien sûr, pour utiliser le dispositif de conversion CV dans le cas présent, de le commander de manière à ce que la source alternative délivre un courant alternatif dont la fondamentale est en phase avec la fondamentale de la tension.

Il est bien entendu que le dispositif de conversion CV peut être commandé par la logique de commande comme un pont redresseur tout thyristor classique.

Il est noter que le dispositif de conversion CV peut fonctionner en pont mixte, en traction ou en pont tout thyristor pour le freinage par récupération.

Par ailleurs, il faut remarquer que si l'on désire que le dispositif d'alimentation puisse fonctionner dans tous les modes précités au moins trois des interrupteurs du dispositif de conversion CV sont des éléments dont tout changement d'état peut être commandé directement, le quatrième pouvant être du type à amorçage commandé et désamorçage naturel.

Il est bien entendu que le dispositif selon l'invention permet non seulement d'alimenter des moteurs à courant continu mais également des moteurs synchrones auto-pilotés et des moteurs asynchrones alimentés par onduleur de courant à commutation forcée.

On a donc décrit selon l'invention un dispositif permettant l'alimentation d'une charge que l'on soit en alternatif ou en continu et ce sans aucune modification de son schéma électrique.

De plus, un tel dispositif présente un excellent facteur de puissance. Il trouve une application en matière ferroviaire dans l'équipement électrique des locomotives du type bi-courant.

**Revendications**

1. Dispositif d'alimentation d'une charge (M) telle qu'un moteur à courant continu, moteur synchrone autopiloté, moteur asynchrone associé à un onduleur de courant à commutation forcée:
caractérisé en ce qu'il comprend un seul dispositif de conversion (CV) comprenant quatre éléments semi-conducteurs unidirectionnels $I_1$ - $I_4$ montés en pont dont au moins trois sont constitués par des éléments dont tout changement d'état peut être commandé directement par une logique de commande permettant le fonctionnement du dispositif de conversion (CV) en mode hacheur lorsque le dispositif est alimenté en courant continu et que la charge fonctionne en moteur ou en générateur, et lorsqu'il est alimenté en courant alternatif soit en mode redresseur lorsque la charge fonctionne en récepteur, soit en onduleur pour assurer la récupération d'énergie lorsque la charge fonctionne en générateur,
en ce que la tension de la charge (M) est inversée lorsque la charge passe du fonctionnement en moteur au fonctionnement en générateur, de manière que le courant ne soit pas inversé dans le dispositif de conversion (CV),
en ce que dans le mode de fonctionnement hacheur du dispositif de conversion précité (CV), quand le dispositif est alimenté en courant continu:
- lorsque la charge fonctionne en moteur l'élément semi-conducteur $I_1$ de l'une des branches du pont, formant l'interrupteur du hacheur, est un élément dont tout changement d'état peut être commandé directement par la logique de commande tandis que les deux éléments semi-conducteurs $I_3$, $I_4$ du pont montés en parallèle à la charge (M) précitée, font office de diode en permanence, le dernier élément semi-conducteur $I_2$ étant en permanence bloqué,
- lorsque la charge fonctionne en mode générateur les éléments semiconducteurs $I_2$ et $I_3$ du pont précité sont passant en permanence, l'élément semi-conducteur $I_1$ du pont étant bloqué en permanence tandis que le dernier élément semi-conducteur $I_4$ est un élément dont tout changement d'état peut être commandé directement par la logique de commande,
en ce qu'en mode de fonctionnement redresseur ou onduleur du dispositif de conversion (CV) précité lorsque le dispositif est alimenté en courant alternatif, les deux éléments semi-conducteurs $I_1$ - $I_2$ du pont précité changent d'état alternativement et successivement et sont des éléments dont tout changement d'état peut être commandé directement par la logique de commande tandis que les deux autres éléments semi-conducteurs $I_3$ et $I_4$ sont passant en permanence, le dispositif de conversion (CV) délivrant en mode de fonctionnement onduleur un courant alternatif dont la composante fondamentale est en phase avec la composante fondamentale de la tension alternative d'alimentation.

2. Dispositif selon la revendication 1, caractérisé en ce que lesdits éléments dont tout changement d'état peut être commandé directement, sont choisis parmi les thyristors à désamorçage commandé par gâchette dits "GTO", et les transistors à porte isolée dits "IGT".

3. Dispositif selon l'une quelconque des revendications 1 et 2, caractérisé en ce que lesdits au moins trois éléments semi-conducteurs $I_1$, $I_2$, $I_4$ précités sont des thyristors à désamorçage commandé par gâchette, le quatrième élément semi-conducteur $I_3$ étant à amorçage commandé et désamorçage naturel.

4. Dispositif d'alimentation selon la revendication 1 d'un moteur électrique de traction pour locomotive ferroviaire du type bi-courant, à partir d'une source, soit à courant continu, soit à courant alternatif, caractérisé en ce qu'il comprend, en combinaison

- un transformateur (TR) dont le primaire est relié à ladite source lorsque celle-ci est du type à courant alternatif, une inductance (L) et un condensateur (C) étant disposés en série entre les bornes du secondaire dudit transformateur par l'intermédiaire d'un inverseur (L) connecté de manière à relier ladite inductance (L) et ledit condensateur (C) soit au secondaire dudit transformateur lorsque ladite source est du type à courant alternatif soit directement à ladite source lorsque celle-ci est du type à courant continu tout en déconnectant ledit secondaire du circuit dans ce dernier cas, et entre les bornes dudit condensateur (C) un pont constitué de quatre éléments semi-conducteurs unidirectionnels formant interrupteurs, trois d'entre eux $I_1$, $I_2$, $I_4$ au moins étant constitués par des éléments dont tout changement d'état peut être commandé directement par une logique de commande tandis que le dernier $I_3$ peut être à amorçage commandé et désamorçage naturel, ledit moteur (M) étant connecté à la sortie dudit pont éventuellement en série avec une inductance de lissage (L1).

5. Dispositif selon la revendication 4, caractérisé en ce que lesdits éléments semi-conducteurs unidirectionnels formant interrupteur dont tout changement d'état peut être commandé directement sont choisis parmi les thyristors à désamorçage commandé par gâchette dits "GTO", et les transistors à porte isolée dits "IGT".

## Patentansprüche

1. Vorrichtung zum Speisen einer Last (M), z. B. eines Gleichstrommotors, eines selbstgesteuerten Synchronmotors, eines mit einem zwangskommutierten Stromwechselrichter verbundenen Asynchronmotors, dadurch gekennzeichnet, daß sie eine einzige Wandlereinheit (CV) mit vier unidirektionalen Halbleiterlementen $I_1$ - $I_4$ in Brückenschaltung umfaßt, von denen mindestens drei aus Elementen bestehen, bei denen jede Zustandsänderung direkt durch eine Steuerlogik bewirkt werden kann, welche den Betrieb der Wandlereinheit (CV) als Zerhacker gestattet, wenn die Vorrichtung mit Gleichstrom, gespeist wird und die Last als Motor oder Generator arbeitet und bei Speisung aus einem Wechselstromnetz den Betrieb der Wandlereinheit entweder als Gleichrichter gestattet, wenn die Last als Verbraucher wirkt oder als Wechselrichter zur Energieückgewinnung, wenn die Last als Generator wirkt; daß die Lastspannung umgekehrt wird, wenn die Last (M) vom Motorbetrieb zum Generatorbetrieb übergeht, derart, daß der Strom in der Wandlereinheit (CV) nicht umgekehrt wird;

daß im Zerhackerbertrieb der genannten Wandlereinheit (CV) wenn die Vorrichung it Gleichstrom gespeist wird:
- im Motorbetrieb das Halbleiterelement $I_1$ in einem der Brückenzweige, das den Unterbrecher des Zerhackers bildet, ein Element ist, bei dem jede Zustandsänderung direkt von einer Steuerlogik bewirkt werden kann, während die beiden parallel zur Last (M) geschalteten Halbleiterelemente $I_3$, $I_4$ der Brücke dauernd als Dioden arbeiten, und das letzte Halbleiterelement $I_2$ dauernd gesperrt ist;
- im Generatorbetrieb die Halbleiterelemente $I_2$, $I_3$ der Brücke dauernd leitend sind, das Halbleiterelement $I_1$ der Brücke dauernd gesperrt ist, während das letzte Halbleiterelement $I_4$ ein Element ist, bei dem jede Zustandsänderung direkt von einer Steuerlogik bewirkt werden kann;

daß bei Betrieb der Wandlereinheit (CV) als Gleichrichter oder Wechselrichter, wenn die Vorrichtung mit Wechselstrom gespeist wird, die beiden Halbleiterelemente $I_1$, $I_2$ der genannten Brücke ihren Zustand alternativ und sukzessiv ändern und Elemente sind, bei denen jede Zustandsänderung direkt von der Steuerlogik bewirkt werden kann, während die beiden anderen Halbleiterelemente $I_3$, $I_4$ dauern leitend sind, wobei die Wandlereinheit (CV) im Wechselrichterbetrieb einen Wechselstrom liefert, dessen Grundkomponente in Phase mit der Grundkomponente der Speisewechselspannung liegt.

2. Vorrichtung nach Anspruch 1, dadurch gekennzeichnet, daß die Elemente, bei denen jede Zustandsänderung direkt gesteuert werden kann, aus der Gruppe der Thyristoren mit gategesteuerter Löschung, "GTO" genannt, und der Transistoren mit isolierter Steuerelektrode, "IGT" genannt, ausgewählt werden.

3. Vorrichtung nach den Ansprüchen 1 und 2, dadurch gekennzeichnet daß mindestens drei der Halbleiterelemente $I_1$, $I_2$ $I_4$ Thyristoren it gategesteuerter Löschung sind, während das vierte Halbleiterelement $I_3$ ein Element mit gesteuerter Zündung und natürlicher Löschung ist.

4. Vorrichtung nach Anspruch 1 zum Speisen eines elektrischen Fahrmotors für Eisenbahnlokomotiven vom Doppelstromtyp aus einer Gleichstromquelle oder aus einer Wechselstromquelle, dadurch gekennzeichnet, daß sie in Kombination aufweist:
- einen Transformator (TR), dessen Primärwicklung an die Quelle angeschlossen ist, falls diese vom Wechselstromtyp ist, wobei eine Induktanz (L) und ein Kondensator (C) mit Hilfe eines Schalters in Reihe zwischen den Klemmen der Sekundärwicklung des Transformators angeordnet sind und der Schalter derart angeschlossen ist, daß er die Znduktanz (L) und den Kondensator (C) mit der Sekundärwicklung des Transformators verbindet, wenn die Quelle vom Wechselstromtyp ist, oder direkt mit der Quelle, wenn diese vom Gleichstromtyp ist, wobei der Schalter in diesem letzten Falle die Sekundärwicklung vom Kreis abtrennt, und
- eine Brücke, die aus vier unidirektionellen Halbleiterelementen, welche Unterrecher bilden, besteht und zwischen den Klemmen des Kondensators (C) eingefügt ist, wobei mindestens drei der Unterbrecher $I_1$, $I_2$, $I_4$ so ausgebildet sind, daß jede Zustandsänderung direkt gesteuert werden kann, während das letzte ein Element mit gesteuerter Zündung und natürlicher Löschung sein kann, und wobei der Motor (M) an den Ausgang dieser Brücke angeschlossen ist, eventuell in Reihe mit einer Glättungsinduktanz.

5. Vorrichtung nach Anspruch 4, dadurch gekennzeichnet, daß die genannten unidirektioralen Halbleiterelemente die Unterbrecher bilden, bei denen jede Zustandsänderung direkt gesteuert werden kann, aus der Gruppe der Thyristoren mit gategesteuerter Loschung, "GTO" genannt, und dar Transistoren mit isolierter Steuerelektrode, "IGT" genannt, ausgewählt werden.

## Claims

1. A power supply device for a load (M), such as a d-c motor, a self-controlled synchronous motor, an asynchronous motor associated with a forced commutation type current inverter, characterized in that it comprises a single conversion unit (CV) including four bridge-connected unidirectional semiconductor elements $I_1$ - $I_4$ of which at least three are constituted by elements, whereof each change of state can be controlled directly by a control logic in such a manner as to ensure the operation of the conversion unit (CV) either in chopper mode when the unit has a d-c supply and the load funtions as a motor or as a generator, or, if there is an a-c supply, in rectifier mode, when the load receives poker, or in inverter mode to ensure energy recovery when the load generates power; in that the load (M) voltage is inverted when the load passes from the motor to the generator mode, so that the current is not inverted in the conversion unit (CV);
in that in the chopper mode of said conversion unit (CV) when the unit is d-c powered:
- while the load functions in motor mode, the semiconductor element $I_1$ of one branch of the bridge, forming the switch of the chopper, is an element, whereof each change of state can be controlled directly by the control logic, whereas the two semiconductor elements $I_3$, $I_4$ of the bridge mounted in parallel to said load (M) function as diodes, while the last semiconductor element $I_2$ is permanently turned off;
- while the load functions in generator mode, the semiconductor elements $I_2$, $I_3$ of said bridge are permanently conducting, the semiconductor element $I_1$ of the bridge being permanently turned off whereas the last semiconductor element $I_4$ is an element, whereof each change of state can be controlled directly by the control logic;
in that in the rectifier or inverter mode of said conversion unit (CV), when the unit is a-c powered, the two semiconductor elements $I_1$, $I_2$ of said bridge change state alternatively and successively and are elements, whereof each change of state can be controlled directly by a control logic, whereas the two other semiconductor elements $I_3$, $I_4$ are permanently conducting, the conversion unit (CV) delivering in the inverter mode an alternating current, the basic component of which is in phase with the basic component of the alternating supply voltage.

2. A device according to claim 1, characterized in that said elements, whereof each change of state can be controlled directly, are selected among the gate-controlled turn-off thyristors, called "GTO", and the insulated gate transistors, called "IGT".

3. A device according to any one of claims 1 and 2, characterized in that said aforementioned at least three semiconductor elements $I_1$, $I_2$, $I_4$ are gate-controlled turn-off thyristors, whereas the fourth semiconductor element $I_3$ is of the controlled firing and the natural turn-off type.

4. A power supply device according to claim 1 for powering an electrical traction motor of dual-current railroad locomotives from either a d-c or an a-c source, characterized in that it comprises in combination:
- a transformer (TR), whose primary winding is connected to the source when the latter is of the a-c type, an inductance (L) and a capacitor (C) being arranged in series between the terminals of the secondary winding of this transformer via an inverter (I) branched in such a manner as to connect the inductance (L) and the capacitor (C) either to the secondary winding of the transformer when the source is of the a-c type, or directly to the source when the latter is of the d-c type while at the same time disconnecting the secondary winding from the circuit in this latter case,

- and, between the terminals of the capacitor, a bridge consisting of four unidirectional semiconductor elements forming switches, at least three of which, $I_1$, $I_2$ $I_4$ are constituted by elements whereof each change of state can be controlled directly, whereas the last 13 may be of the controlled firing and the natural turn-off type, the motor (M) being connected to the output of this bridge possibly in series with a smoothing inductance (Ld).

5. A device according to claim 4, characterized in that said unidirectional switch forming semiconductor elements, whereof each change of state can be controlled directly are selected among the gate-controlled turn-off thyristors, called "GTO", and the insulated gate transistors, called "IGT".

FIG. 1

FIG. 2

FIG. 3